# EUROPEAN PATENT SPECIFICATION

(11) **EP 3 506 257 B1**
(45) Date of publication and mention of the grant of the patent: **19.04.2023**
(21) Application number: 18197874.3
(22) Date of filing: 01.10.2018
(51) Int. Cl.: G10L 15/22

(54) **INFORMATION CAPTURING DEVICE AND VOICE CONTROL METHOD**
INFORMATIONSERFASSUNGSVORRICHTUNG UND SPRACHSTEUERUNGSVERFAHREN
DISPOSITIF DE CAPTURE D'INFORMATIONS ET PROCÉDÉ DE COMMANDE VOCALE

(30) Priority: 02.01.2018 US 201862613010 P
(43) Date of publication of application: 03.07.2019
(73) Proprietor: Getac Technology Corporation, Taipei City 11568 (TW)
(72) Inventor: CHEN, Min-Tai, 11568 Taipei City (TW)
(74) Representative: Viering, Jentschura & Partner mbB Patent- und Rechtsanwälte

(56) References cited:
- WO-A1-2015/081820
- CA-A1- 2 903 640
- CN-A- 106 782 529
- US-A1- 2012 245 941
- US-A1- 2014 006 825
- US-A1- 2017 019 580

## Description

### BACKGROUND OF THE INVENTION

### FIELD OF THE INVENTION

The present disclosure relates to technology of controlling information capturing devices and, more particularly, to an information capturing device and voice control technology related thereto.

### DESCRIPTION OF THE PRIOR ART

Police officers on duty have to record sounds and shoot videos in order to collect evidence and preserve the evidence. Hence, police officers on duty wear information capturing devices for capturing medium-related data, including images and sounds, from the surroundings, so as to facilitate policing. The medium-related data recorded by the information capturing devices is descriptive of real-time on-site conditions of an ongoing event with a view to fulfilling burdens of proof and clarifying liabilities later. US 2014/0006825 A1 discloses a method for transitioning an electronic device from a power conservation state to a powered state based on detected sounds and an analysis of the detected sound. Further examples of voice-controlled cameras are disclosed in US2017/019580A1 and CA2 903 640 A1. Besides, CN 106782529 A discloses a voice recognition wake-up word selection method. Further, US2012/0245941A1 discloses a device where voiceprints of commands are generated and used to authenticate users. Yet, the voiceprints are not determined for each command,

Users operate start switches of conventional portable information capturing devices in order to enable the portable information capturing devices to capture data related to the surroundings. However, in an emergency, a typical scenario is as follows: it is too late for the users to start capturing data by hand; or images and/or sounds related to a crucial situation have already vanished by the time the users start capturing data by hand. Furthermore, to get informed of operation-related status of the portable information capturing devices, such as remaining power level and/or capacity, the users have to operate function switches of the portable information capturing devices in order to enable the portable information capturing devices to display captured information in real time.

It is an object of the invention to overcome the shortcomings in the prior art. This object of the invention is solved by the independent claims. Specific embodiments are defined in the dependent claims.

### SUMMARY OF THE INVENTION

The object is solved by a voice control method for an information capturing device according to independent claim 1, and an information capturing device according to independent claim 5.

### BRIEF DESCRIPTION OF THE DRAWINGS

FIG. 1 is a block diagram of circuitry of an information capturing device according to an embodiment of the present disclosure;
FIG. 2 is a flowchart of a voice control method for the information capturing device according to an embodiment of the present disclosure;
Fig. 3 is a block diagram of circuitry of the information capturing device according to another embodiment of the present disclosure;
FIG. 4 is a flowchart of the voice control method for the information capturing device according to yet another embodiment of the present disclosure; and
FIG. 5 is a flowchart of the voice control method for the information capturing device according to still yet another embodiment of the present disclosure.

### DETAILED DESCRIPTION OF THE EMBODIMENTS

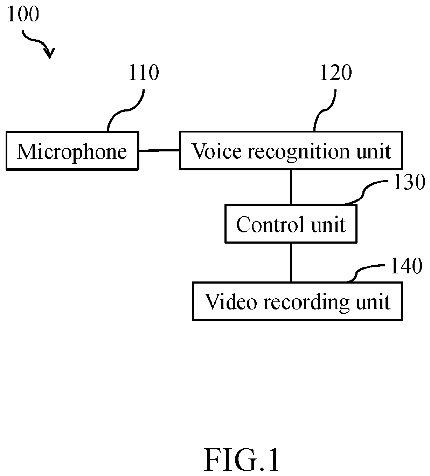

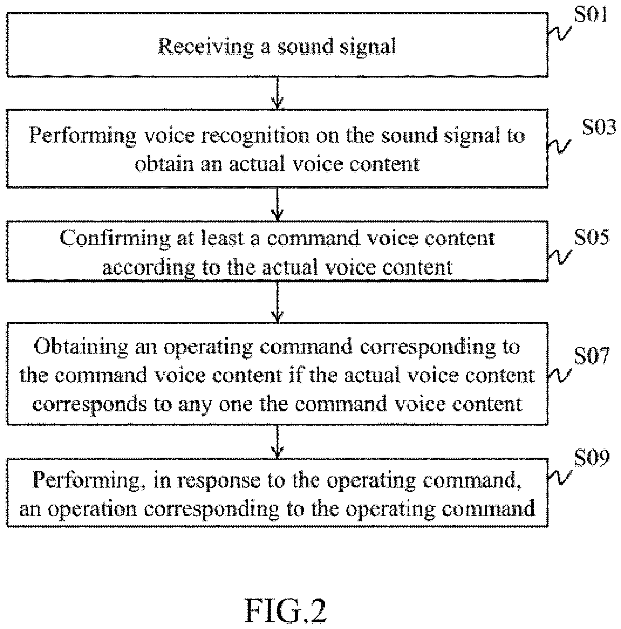

FIG. 1 is a block diagram of circuitry of an information capturing device according to an embodiment of the present disclosure. FIG. 2 is a flowchart of a voice control method for the information capturing device according to an embodiment of the present disclosure. Referring to FIG. 1 and FIG. 2, an information capturing device 100 includes a microphone 110, a voice recognition unit 120 and a control unit 130. The microphone 110 is coupled to the voice recognition unit 120. The voice recognition unit 120 is coupled to the control unit 130.

The microphone 110 receives a voice emitted from a user. The microphone 110 has a signal processing circuit (not shown). The signal processing circuit turns the voice (sound wave defined in physics) into a sound signal (digital signal).

The voice recognition unit 120 receives the sound signal (step S01) and performs voice recognition on the sound signal, so as to obtain an actual voice content (step S03). In an embodiment, in step S03, the voice recognition unit 120 analyzes the sound signal to therefore capture at least a feature of the sound signal, and then the voice recognition unit 120 discerns or compares the at least a feature of the sound signal with data of a voice model database to therefore select or determine a text content of the sound signal, so as to obtain an actual voice content which matches the at least a feature of the sound signal. In an exemplary embodiment, the voice model database contains voice signals in the form of word strings composed of one-word terms, multiple-word terms, and sentences. The voice recognition unit 120 analyzes and compares the at least a feature of the sound signal with a feature of each voice signal of the voice model database to therefore obtain an actual voice content.

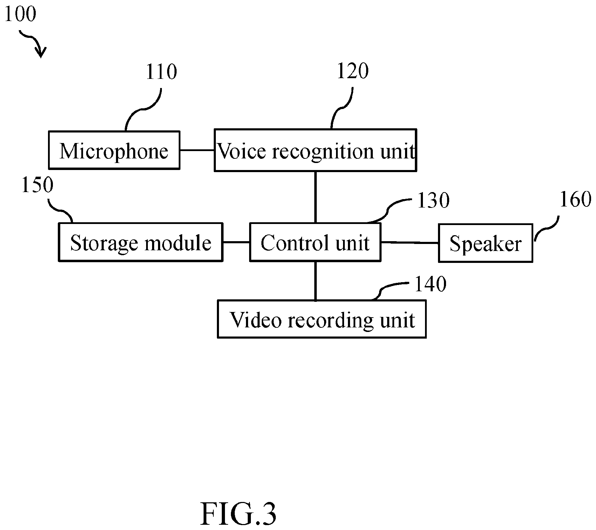

Afterward, the control unit 130 confirms at least a command voice content according to the actual voice content (step S05). In an exemplary embodiment, relationship between the actual voice content and the at least a command voice content is recorded in a lookup table (not shown) such that the control unit 130 searches the lookup table for at least one or a plurality of command voice contents and confirms the command voice content(s) corresponding to the actual voice content. In an embodiment aspect, the lookup table is stored in a storage module 150 of the information capturing device 100. Therefore, the information capturing device 100 further includes a storage module 150 (shown in FIG. 3). The storage module 150 is coupled to the control unit 130.

If the actual voice content corresponds to any one command voice content, that is, the actual voice content corresponds to the command voice content in whole or corresponds to the command voice content and another none-command voice content (such as an ambient sound content), the control unit 130 obtains an operating command corresponding to the command voice content according to the command voice content corresponding to the actual voice content (step S07). In an exemplary embodiment, an actual voice content corresponding to any one command voice content is identical to the command voice content in whole. In another exemplary embodiment, an actual voice content corresponding to any one command voice content is identical to the command voice content in part above a specific ratio. In yet another exemplary embodiment, an actual voice content corresponding to any one command voice content includes a content identical to the command voice content but different from the other contents (such as an ambient sound content) of the command voice content.

The control unit 130 performs, in response to an operating command, an operation corresponding to the operating command (step S09). In an exemplary embodiment, as soon as the corresponding command voice content in the lookup table is found, the control unit 130 fetches from the lookup table the operating command corresponding to the command voice content found and thus performs the corresponding operation.

In some embodiments, the control unit 130 is implemented as one or more processing components. The processing components are each a microprocessor, microcontroller, digital signal processor, central processing unit (CPU), programmable logic controller, state machine, or any analog and/or digital device based on the operating command and the operating signal, but the present disclosure is not limited thereto.

In some embodiments, the storage module 150 is implemented as one or more storage components. The storage components are each, for example, a memory or a register, but the present disclosure is not limited thereto.

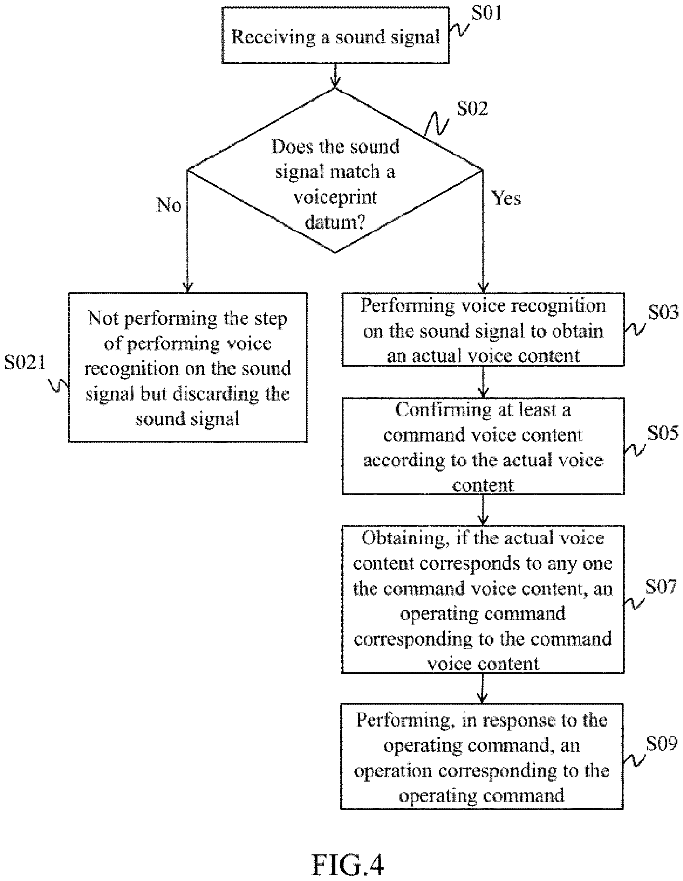

FIG. 4 is a flowchart of the voice control method for the information capturing device according to yet another embodiment of the present disclosure. As shown in FIG. 4, before step S03, the control unit 130 confirms the sound signal according to a voiceprint datum (step S02). Step S03 through step S09 are substantially identical to their aforesaid counterparts.

In an embodiment aspect, a user records each operating command beforehand with the microphone 110 in order to configure a predetermined sound spectrum correlated to the user and corresponding to each operating command. The voiceprint datum is the predetermined sound spectrum corresponding to each operating command. In another embodiment aspect, the voiceprint datum is recorded beforehand by one or more users and is the predetermined sound spectrum corresponding to each operating command. The voice recognition unit 120 analyzes the sound signal and thus creates an input sound spectrum such that the voice recognition unit 120 discerns or compares features of the input sound spectrum with features of a predetermined sound spectrum of the voiceprint datum to therefore perform identity authentication on a user, thereby identifying whether the sound is attributed to the user's voice.

If the sound signal matches the voiceprint datum, that is, if features of the input sound spectrum match features of a predetermined sound spectrum of the voiceprint datum, the control unit 130 performs voice recognition on the sound signal (step S03). Afterward, the information capturing device 100 proceeds to execute step S05 through step S09. In an embodiment aspect, the voiceprint datum is stored in the storage module 150 of the information capturing device 100. Therefore, the information capturing device 100 further includes a storage module 150 (shown in FIG. 3). The storage module 150 is coupled to the control unit 130.

If the sound signal does not match the voiceprint datum, that is, if features of the input sound spectrum do not match features of a predetermined sound spectrum of the voiceprint datum, the control unit 130 does not perform voice recognition on the sound signal but discards the sound signal (step S021).

The information capturing device 100 further includes a video recording unit 140. The video recording unit 140 is coupled to the control unit 130 and is capable of video recording. If operating command is a start recording command, the control unit 130 obtains the start recording command according to the command voice content corresponding to the actual voice content (step S07). Then, the control unit 130 controls, in response to the start recording command (i.e., in response to the operating command), the video recording unit 140 to perform video recording to therefore capture an ambient datum (step S09), that is, recording ambient images and/or sounds of the surroundings. The ambient datum is a medium-related file including ambient images and/or sounds, for example, a sound generated from a human being, animal or object in the surroundings (such as a horn sound made by a passing vehicle or a shout made by a pedestrian.) In some embodiments, the operating command is "start recording command," "finish recording command," "command of feeding back the number of hours video-recordable," "command of saving a file and playing a prompt sound," "command of feeding back remaining capacity" or "command of feeding back resolution," but the present disclosure is not limited thereto.

In some embodiments, the video recording unit 140 is implemented as an image pickup lens and an image processing unit. In an exemplary embodiment, the image processing unit is an image signal processor (ISP). In another exemplary embodiment, the image processing unit and the control unit 130 is implemented by the same chip, but the present disclosure is not limited thereto.

In an exemplary embodiment illustrated by FIG. 1 and FIG. 2, if a user says "start camera recording" to the microphone 110, the microphone 110 receives a sound signal (step S01) and sends the received sound signal to the voice recognition unit 120. The voice recognition unit 120 performs voice recognition on the sound signal to obtain an actual voice content of "start camera recording" (step S03). The control unit 130 sequentially confirms the command voice contents recorded in the lookup table according to the actual voice contents of "start camera recording" obtained according to results of voice recognition (step S05), so as to identify the command voice content corresponding to the actual voice content. After identifying the command voice content, the control unit 130 fetches from the lookup table the operating command of "start recording command" corresponding to the command voice content (step S07). The control unit 130 controls, in response to the start recording command (i.e., in response to the operating command), the video recording unit 140 to perform video recording and thus capture an ambient datum (step S09). In an embodiment aspect, the control unit 130 further controls, in response to the start recording command (i.e., in response to the operating command), a light-emitting module (not shown) to emit light such that the user is aware that the video recording unit 140 is performing video recording.

In an exemplary embodiment, if the operating command is a finish recording command, the control unit 130 obtains the finish recording command according to the command voice content corresponding to the actual voice content (step S07), and then the control unit 130 controls, in response to the finish recording command (i.e., in response to the operating command), the video recording unit 140 to finish video recording so as to create an ambient datum (step S09). Therefore, in response to the finish recording command, the control unit 130 saves the ambient datum as a corresponding medium-related file. In an exemplary embodiment illustrated by FIG. 1 and FIG. 2, if the voice recognition unit 120 receives a sound signal (step S01) and performs voice recognition to obtain an actual voice content of "end camera recording" (step S03) and then the control unit 130 confirms the command voice content according to the actual voice content of "end camera recording" (step S05), the control unit 130 obtains the finish recording command (the operating command) corresponding to the command voice content according to the command voice content corresponding to the actual voice content of "end camera recording" (step S07). Afterward, the control unit 130 controls, in response to the finish recording command (i.e., in response to the operating command), the video recording unit 140 to finish video recording and thus create an ambient datum (step S09) before creating a medium-related file based on the ambient datum and then storing the medium-related file in the storage module 150. In an embodiment aspect, the control unit 130 further controls, in response to the finish recording command (i.e., in response to the operating command), a light-emitting module (not shown) to turn off such that the user is aware that the video recording unit 140 has already finished video recording and created the ambient datum.

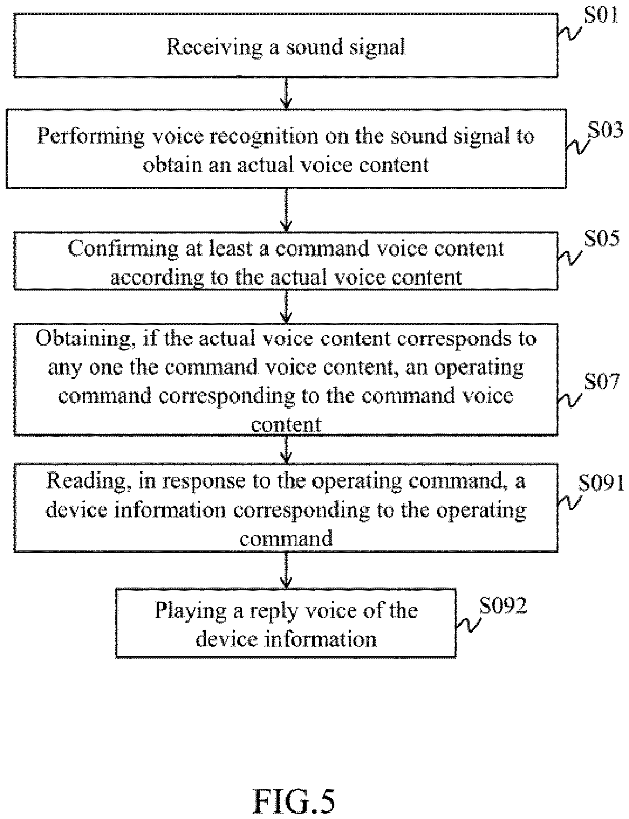

FIG. 5 is a flowchart of the voice control method for the information capturing device according to still yet another embodiment of the present disclosure. As shown in FIG. 3 and FIG. 5, in some embodiments of step S09, the control unit 130 reads, in response to the operating command, a device information corresponding to the operating command (step S091), and then the control unit 130 controls a speaker 160 to play a reply voice of the device information (step S092). Step S01 through step S07 are substantially identical to their aforesaid counterparts.

In an exemplary embodiment, if the voice recognition unit 120 receives a sound signal (step S01) and performs voice recognition to obtain an actual voice content of "battery life" (step S03) and then the control unit 130 confirms the command voice content according to the actual voice content of "battery life" (step S05), the control unit 130 obtains "command of feeding back the number of hours video-recordable" (operating command) corresponding to the command voice content according to the command voice content corresponding to the actual voice content of "battery life" (step S07). The control unit 130 reads, in response to "command of feeding back the number of hours video-recordable" (operating command) (i.e., in response to the operating command), the number of hours video-recordable from the device information (step S091). In an embodiment aspect, the control unit 130 counts the current number of video-recorded hours as well as determines the current number of video-recordable hours according to the remaining power level and/or capacity. Therefore, the information capturing device 100 further includes a timing module (not shown). The timing module is coupled to the control unit 130. Afterward, the control unit 130 controls a speaker 160 to play a reply voice of the number of hours video-recordable (step S092). In an embodiment aspect, the speaker 160 is built in a display unit (not shown), and the display unit is coupled to the control unit 130. The control unit 130 reads, in response to "command of feeding back the number of hours video-recordable" (operating command), the number of hours video-recordable from the device information (step S091). The control unit 130 controls a display panel of the display unit to display video frame information and the speaker 160 to play audio information (step S092).

In an exemplary embodiment, if the user says "event 1" to the microphone 110, the microphone 110 receives a sound signal (step S01) and sends the received sound signal to the voice recognition unit 120. The voice recognition unit 120 performs voice recognition on the sound signal so as to obtain an actual voice content of "event 1" (step S03). The control unit 130 sequentially confirms the command voice contents recorded in the lookup table according to the actual voice content of "event 1" obtained according to results of voice recognition (step S05), so as to identify the command voice content corresponding to the actual voice content. After identifying the command voice content, the control unit 130 fetches from the lookup table the operating command of "command of saving a file and playing a prompt sound" corresponding to the command voice content (step S07). In response to "command of saving a file and playing a prompt sound" (i.e., in response to the operating command), the control unit 130 saves the video file and plays a reply voice.

In an exemplary embodiment, if the user says "feeding back remaining capacity" to the microphone 110, the microphone 110 receives a sound signal (step S01) and sends the received sound signal to the voice recognition unit 120. The voice recognition unit 120 performs voice recognition on the sound signal to obtain an actual voice content of "feeding back remaining capacity" (step S03). The control unit 130 sequentially confirms the command voice contents recorded in the lookup table according to the actual voice contents of "feeding back remaining capacity" obtained according to results of voice recognition (step S05), so as to identify the command voice content corresponding to the actual voice content. After identifying the command voice content, the control unit 130 fetches from the lookup table the operating command of "feeding back remaining capacity" corresponding to the command voice content (step S07). In response to "command of reading remaining capacity and playing a prompt sound" (*i.e*., in response to the operating command), the control unit 130 reads the remaining capacity from the device information and plays a reply voice of the remaining capacity from the device information.

In an exemplary embodiment, if the user says "feeding back resolution" to the microphone 110, the microphone 110 receives a sound signal (step S01) and sends the received sound signal to the voice recognition unit 120. The voice recognition unit 120 performs voice recognition on the sound signal to obtain an actual voice content of "feeding back resolution" (step S03). The control unit 130 sequentially confirms the command voice contents recorded in the lookup table according to the actual voice content of "feeding back resolution" obtained according to results of voice recognition (step S05), so as to identify the command voice content corresponding to the actual voice content. After identifying the command voice content, the control unit 130 fetches from the lookup table the operating command of "command of feeding back resolution" corresponding to the command voice content (step S07). In response to "command of feeding back resolution and playing a prompt sound" (i.e., in response to the operating command), the control unit 130 reads resolution from the device information and plays a reply voice of resolution from the device information.

In some embodiments, the information capturing device 100 is a portable image pickup device, such as a wearable camera, a portable evidence-collecting camcorder, a mini camera, or a hidden voice recorder mounted on a hat or clothes. In some embodiments, the information capturing device 100 is a stationary image pickup device, such as a dashboard camera mounted on a vehicle.

In conclusion, an information capturing device and a voice control method for the same in embodiments of the present disclosure entails performing voice recognition on a sound signal to therefore obtain an actual voice content and thus obtain a corresponding operating command, so as to perform, in response to the operating command, an operation corresponding to the operating command.

Although the present disclosure is disclosed above by preferred embodiments, the preferred embodiments are not restrictive of the present disclosure. Accordingly, the legal protection for the present disclosure should be defined by the appended claims.

## Claims

1. A voice control method for an information capturing device (100), comprising the steps of:
receiving a sound signal (S01);
confirming the sound signal according to a voiceprint datum (S02),
wherein the voiceprint datum is recorded beforehand by one or more users and is a predetermined sound spectrum corresponding to each operating command;
analyzing, by a voice recognition unit (120), the sound signal and thus creating an input sound spectrum;
discerning and comparing, by the voice recognition unit (120), features of the input sound spectrum with features of the predetermined sound spectrum of the voiceprint datum to therefore perform identity authentication on a user, thereby identifying whether the sound is attributed to the user's voice;
performing the voice recognition on the sound signal only if the sound signal matches the voiceprint datum to obtain an actual voice content (S03); and
not performing the voice recognition on the sound signal but discarding the sound signal if the sound signal does not match the voiceprint datum (S021),
confirming at least a command voice content according to the actual voice content (S05);
obtaining an operating command corresponding to the command voice content if the actual voice content corresponds to any of the command voice content (S07); and
performing, in response to the operating command, an operation corresponding to the operating command (S09).

2. The method of claim 1, wherein the step of performing, in response to the operating command, the operation corresponding to the operating command (S09) comprises the sub-steps of:
reading, in response to the operating command, a device information corresponding to the operating command (S091); and
playing a reply voice of the device information (S092).

3. The method of claim 1, wherein the operating command is a start recording command, and the step of performing, in response to the operating command, the operation corresponding to the operating command comprises the sub-step of controlling, in response to the start recording command, a video recording unit (140) to perform video recording so as to capture an ambient datum, wherein the ambient datum is a medium-related file including ambient images and/or sounds.

4. The method of claim 2, wherein the operating command is a finish recording command, and the step of performing, in response to the operating command, the operation corresponding to the operating command comprises the sub-step of controlling, in response to the finish recording command, the video recording unit (140) to finish video recording so as to create the ambient datum.

5. An information capturing device (100), comprising:
a microphone (110) for receiving a voice to create a sound signal corresponding to the received voice;
a voice recognition unit (120) coupled to the microphone (110) to perform voice recognition on the sound signal so as to obtain an actual voice content;
a video recording unit (140) for performing video recording so as to capture an ambient datum, wherein the ambient datum is a medium-related file including ambient images and/or sounds; and
a control unit (130) coupled to the voice recognition unit (120) and the video recording unit (140) to obtain an operating command corresponding to a command voice content when the actual voice content corresponds to the command voice content and perform, in response to the operating command, an operation corresponding to the operating command,
wherein the control unit (130) confirms the sound signal according to a voiceprint datum, performs the voice recognition on the sound signal only if the sound signal matches the voiceprint datum, and does not perform the voice recognition on the sound signal but discards the sound signal if the sound signal does not match the voiceprint datum;
wherein the voiceprint datum is configured to be recorded beforehand by one or more users and is a predetermined sound spectrum corresponding to each operating command, wherein the voice recognition unit (120) is configured to analyze the sound signal and thus to create an input sound spectrum such that the voice recognition unit (120) is configured to discern or compare features of the input sound spectrum with features of the predetermined sound spectrum of the voiceprint datum to therefore being configured to perform identity authentication on a user, thereby identifying whether the sound is attributed to the user's voice.

6. The information capturing device (100) of claim 5, further comprising a speaker (160), wherein, during the operation performed in response to the operating command and corresponding to the operating command, the control unit (130) reads, in response to the operating command, a device information corresponding to the operating command, and the speaker (160) plays a reply voice of the device information.

7. The information capturing device (100) of claim 5, wherein the operating command is a start recording command, and, during the operation performed in response to the operating command and corresponding to the operating command, the control unit (130) controls, in response to the start recording command, the video recording unit (140) to perform video recording so as to capture the ambient datum.

8. The information capturing device (100) of claim 7, wherein the operating command is a finish recording command, and, during the operation performed in response to the operating command and corresponding to the operating command, the control unit (130) controls, in response to the finish recording command, the video recording unit (140) to finish video recording so as to create the ambient datum.

## Patentansprüche

1. Sprachsteuerungsverfahren für eine Informationsaufnahmevorrichtung (100), welches die folgenden Schritte aufweist:
Empfangen eines Schallsignals (S01),
Bestätigen des Schallsignals gemäß einem Stimmabdruck-Datenelements (S02),
wobei das Stimmabdruck-Datenelement im Voraus von einem oder mehreren Benutzern aufgezeichnet wird und ein vorbestimmtes Schallspektrum ist, welches mit jedem Bedienbefehl korrespondiert,
Analysieren, mittels einer Spracherkennungseinheit (120), des Schallsignals und daher Erzeugen eines Eingangsschallspektrums,
Wahrnehmen und Vergleichen, mittels der Spracherkennungseinheit (120), von Merkmalen des Eingangsschallspektrums mit Merkmalen des vorbestimmten Schallspektrums des Stimmabdruck-Datenelements, um so eine Identitätsauthentifizierung eines Benutzers durchzuführen, wodurch identifiziert wird, ob der Schall der Stimme des Benutzers zuzuordnen ist,
Durchführen der Spracherkennung an dem Schallsignal nur dann, wenn das Schallsignal mit dem Stimmabdruck-Datenelement übereinstimmt, um einen tatsächlichen Sprachinhalt zu erlangen (S03), und
Nicht-Durchführen der Spracherkennung an dem Schallsignal, sondern Verwerfen des Schallsignals, wenn das Schallsignal nicht mit dem Stimmabdruck-Datenelement übereinstimmt (S021),
Bestätigen mindestens eines Befehl-Sprachinhalts gemäß dem tatsächlichen Sprachinhalt (S05),
Erlangen eines Betriebsbefehls, welcher mit dem Befehl-Sprachinhalt korrespondiert, wenn der tatsächliche Sprachinhalt mit einem Beliebigen des Befehl-Sprachinhalts übereinstimmt (S07), und
Durchführen, als Reaktion auf den Betriebsbefehl, eines Vorgangs, welcher mit dem Betriebsbefehl korrespondiert (S09).

2. Verfahren gemäß Anspruch 1, wobei der Schritt des Durchführens, als Reaktion auf den Betriebsbefehl, des Vorgangs, welcher mit dem Betriebsbefehl korrespondiert (S09), die folgenden Sub-Schritte aufweist:
Lesen, als Reaktion auf den Betriebsbefehl, von Vorrichtungsinformationen, welche mit dem Betriebsbefehl korrespondieren (S091), und
Antwortstimmenabspielen der Vorrichtungsinformationen (S092).

3. Verfahren gemäß Anspruch 1, wobei der Betriebsbefehl ein Aufnehmen-Starten-Befehl ist, und der Schritt des Durchführens, als Reaktion auf den Betriebsbefehl, des Vorgangs, welcher mit dem Betriebsbefehl korrespondiert, den Sub-Schritt des Steuerns einer Videoaufnahmeeinheit (140), als Reaktion auf den Aufnehmen-Starten-Befehl, aufweist, um Videoaufnehmen durchzuführen, um ein Umgebung-Datenelement aufzunehmen, wobei das Umgebung-Datenelement eine medienbezogene Datei ist, welche Umgebungsbilder und/oder -schälle aufweist.

4. Verfahren gemäß Anspruch 2, wobei der Betriebsbefehl ein Aufnehmen-Beenden-Befehl ist, und der Schritt des Durchführens, als Reaktion auf den Betriebsbefehl, des Vorgangs, welcher mit dem Betriebsbefehl korrespondiert, den Sub-Schritt des Steuerns der Videoaufnahmeeinheit (140), als Reaktion auf den Aufnehmen-Beenden-Befehl, aufweist, um das Videoaufnehmen zu beenden, um das Umgebung-Datenelement zu erzeugen.

5. Informationsaufnahmevorrichtung (100), aufweisend:
ein Mikrofon (110) zum Empfangen einer Stimme, um ein Schallsignal zu erzeugen, welches mit der empfangenen Stimme korrespondiert,
eine Spracherkennungseinheit (120), welche mit dem Mikrofon (110) verbunden ist, um eine Spracherkennung an dem Schallsignal durchzuführen, um einen tatsächlichen Sprachinhalt zu erlangen,
eine Videoaufnahmeeinheit (140) zum Durchführen von Videoaufnehmen, um ein Umgebung-Datenelement aufzunehmen, wobei das Umgebung-Datenelement eine medienbezogene Datei ist, welche Umgebungsbilder und/oder -schälle aufweist, und
eine Steuereinheit (130), welche mit der Spracherkennungseinheit (120) und der Videoaufnahmeeinheit (140) verbunden ist, um einen Betriebsbefehl zu erlangen, welcher mit einem Befehl-Sprachinhalt korrespondiert, wenn der tatsächliche Sprachinhalt mit dem Befehl-Sprachinhalt korrespondiert, und um, als Reaktion auf den Betriebsbefehl, einen Vorgang durchzuführen, welcher mit dem Betriebsbefehl korrespondiert,
wobei die Steuereinheit (130) das Schallsignal gemäß einem Stimmabdruck-Datenelement bestätigt, die Spracherkennung an dem Schallsignal nur dann durchführt, wenn das Schallsignal mit dem Stimmabdruck-Datenelement übereinstimmt, und die Spracherkennung an dem Schallsignal nicht durchführt, sondern das Schallsignal verwirft, wenn das Schallsignal nicht mit dem Stimmabdruck-Datenelement übereinstimmt,
wobei das Stimmabdruck-Datenelement konfiguriert ist, um im Voraus von einem oder mehreren Benutzern aufgezeichnet zu werden, und ein vorbestimmtes Schallspektrum ist, welches mit jedem Betriebsbefehl korrespondiert, wobei die Spracherkennungseinheit (120) konfiguriert ist, um das Schallsignal zu analysieren und daher ein Eingangsschallspektrum zu erzeugen derart, dass die Spracherkennungseinheit (120) konfiguriert ist, um Merkmale des Eingangsschallspektrums wahrzunehmen oder zu vergleichen mit Merkmalen des vorbestimmten Schallspektrums des Stimmabdruck-Datenelements, um daher konfiguriert zu sein, um eine Identitätsauthentifizierung bei einem Benutzer durchzuführen, wodurch identifiziert wird, ob der Schall der Stimme des Benutzers zugeordnet wird.

6. Informationsaufnahmevorrichtung (100) gemäß Anspruch 5, ferner einen Lautsprecher (160) aufweisend, wobei, während des Vorgangs, welcher als Reaktion auf den Betriebsbefehl durchgeführt wird und mit dem Betriebsbefehl korrespondiert, die Steuereinheit (130), als Reaktion auf den Betriebsbefehl, Vorrichtungsinformationen liest und der Lautsprecher (160) eine Antwortstimme der Vorrichtungsinformationen abspielt.

7. Informationsaufnahmevorrichtung (100) gemäß Anspruch 5, wobei der Betriebsbefehl ein Aufnehmen-Starten-Befehl ist, und, während des Vorgangs, welcher als Reaktion auf den Betriebsbefehl durchgeführt wird und mit dem Betriebsbefehl korrespondiert, die Steuereinheit (130), als Reaktion auf den Aufnehmen-Starten-Befehl, die Videoaufnahmeeinheit (140) steuert, um Videoaufnehmen durchzuführen, um das Umgebung-Datenelement aufzunehmen.

8. Informationsaufnahmevorrichtung (100) gemäß Anspruch 7, wobei der Betriebsbefehl ein Aufnehmen-Beenden-Befehl ist, und, während des Vorgangs, welcher als Reaktion auf den Betriebsbefehl durchgeführt wird und mit dem Betriebsbefehl korrespondiert, die Steuereinheit (130), als Reaktion auf den Aufnehmen-Beenden-Befehl, die Videoaufnahmeeinheit (140) steuert, um das Videoaufnehmen zu beenden, um das Umgebung-Datenelement aufzunehmen.

## Revendications

1. Procédé de commande vocale pour un dispositif de capture d'informations (100), comprenant les étapes consistant à :
recevoir un signal sonore (S01) ;
confirmer le signal sonore selon une donnée d'empreinte vocale (S02),
dans lequel la donnée d'empreinte vocale est enregistrée au préalable par un ou plusieurs utilisateurs et est un spectre sonore prédéterminé correspondant à chaque commande de fonctionnement ;
analyser, par une unité de reconnaissance vocale (120), le signal sonore et créer ainsi un spectre sonore d'entrée ;
discerner et comparer, par l'unité de reconnaissance vocale (120), des caractéristiques du spectre sonore d'entrée avec des caractéristiques du spectre sonore prédéterminé de la donnée d'empreinte vocale pour effectuer ainsi une authentification d'identité sur un utilisateur, identifiant ainsi si le son est attribué à la voix de l'utilisateur ;
effectuer la reconnaissance vocale sur le signal sonore uniquement si le signal sonore correspond à la donnée d'empreinte vocale pour obtenir un contenu vocal réel (S03) ; et
ne pas effectuer la reconnaissance vocale sur le signal sonore mais rejeter le signal sonore si le signal sonore ne correspond pas à la donnée d'empreinte vocale (S021),
confirmer au moins un contenu vocal de commande selon le contenu vocal réel (S05) ;
obtenir une commande de fonctionnement correspondant au contenu vocal de commande si le contenu vocal réel correspond à l'un quelconque du contenu vocal de commande (S07) ; et
exécuter, en réponse à la commande de fonctionnement, une opération correspondant à la commande de fonctionnement (S09).

2. Procédé selon la revendication 1, dans lequel l'étape consistant à effectuer, en réponse à la commande de fonctionnement, l'opération correspondant à la commande de fonctionnement (S09) comprend les sous-étapes suivantes :
lire, en réponse à la commande de fonctionnement, une information de dispositif correspondant à la commande de fonctionnement (S091) ; et
jouer une voix de réponse de l'information de dispositif (S092).

3. Procédé selon la revendication 1, dans lequel la commande de fonctionnement est une commande de début d'enregistrement, et l'étape consistant à exécuter, en réponse à la commande de fonctionnement, l'opération correspondant à la commande de fonctionnement comprenant la sous-étape consistant à commander, en réponse à la commande de début d'enregistrement, une unité d'enregistrement vidéo (140) pour effectuer un enregistrement vidéo de façon à capturer une donnée ambiante, dans lequel la donnée ambiante est un fichier lié au support comprenant des images et/ou des sons ambiants.

4. Procédé selon la revendication 2, dans lequel la commande de fonctionnement est une commande de fin d'enregistrement, et l'étape consistant à exécuter, en réponse à la commande de fonctionnement, l'opération correspondant à la commande de fonctionnement comprenant la sous-étape consistant à commander, en réponse à la commande de fin d'enregistrement, l'unité d'enregistrement vidéo (140) pour terminer l'enregistrement vidéo de manière à créer la donnée ambiante.

5. Dispositif de capture d'informations (100) comprenant :
un microphone (110) pour recevoir une voix afin de créer un signal sonore correspondant à la voix reçue ;
une unité de reconnaissance vocale (120) couplée au microphone (110) pour effectuer une reconnaissance vocale sur le signal sonore de manière à obtenir un contenu vocal réel ;
une unité d'enregistrement vidéo (140) pour effectuer un enregistrement vidéo de manière à capturer une donnée ambiante, dans laquelle la donnée ambiante est un fichier lié au support comprenant des images et/ou des sons ambiants ; et
une unité de commande (130) couplée à l'unité de reconnaissance vocale (120) et à l'unité d'enregistrement vidéo (140) pour obtenir une commande de fonctionnement correspondant à un contenu vocal de commande lorsque le contenu vocal réel correspond au contenu vocal de commande et exécuter, en réponse à la commande de fonctionnement, une opération correspondant à la commande de fonctionnement,
dans lequel l'unité de commande (130) confirme le signal sonore selon une donnée d'empreinte vocale, effectue la reconnaissance vocale sur le signal sonore uniquement si le signal sonore correspond à la donnée d'empreinte vocale, et n'effectue pas la reconnaissance vocale sur le signal sonore mais rejette le signal sonore si le signal sonore ne correspond pas à la donnée d'empreinte vocale ;
dans lequel la donnée d'empreinte vocale est configurée pour être enregistrée au préalable par un ou plusieurs utilisateurs et est un spectre sonore prédéterminé correspondant à chaque commande de fonctionnement, dans lequel l'unité de reconnaissance vocale (120) est configurée pour analyser le signal sonore et ainsi créer un spectre sonore d'entrée de sorte que l'unité de reconnaissance vocale (120) est configurée pour discerner ou comparer des caractéristiques du spectre sonore d'entrée avec des caractéristiques du spectre sonore prédéterminé de la donnée d'empreinte vocale pour être ainsi configurée pour effectuer une authentification d'identité sur un utilisateur, identifiant ainsi si le son est attribué à la voix de l'utilisateur.

6. Dispositif de capture d'informations (100) selon la revendication 5, comprenant en outre un haut-parleur (160), dans lequel, pendant l'opération effectuée en réponse à la commande de fonctionnement et correspondant à la commande de fonctionnement, l'unité de commande (130) lit, en réponse à la commande de fonctionnement, des informations de dispositif correspondant à la commande de fonctionnement, et le haut-parleur (160) joue une voix de réponse des informations de dispositif.

7. Dispositif de capture d'informations (100) selon la revendication 5, dans lequel la commande de fonctionnement est une commande de début d'enregistrement, et, pendant l'opération effectuée en réponse à la commande de fonctionnement et correspondant à la commande de fonctionnement, l'unité de commande (130) commande, en réponse à la commande de début d'enregistrement, l'unité d'enregistrement vidéo (140) pour effectuer un enregistrement vidéo de manière à capturer la donnée ambiante.

8. Dispositif de capture d'informations (100) selon la revendication 7, dans lequel la commande de fonctionnement est une commande de fin d'enregistrement, et, pendant l'opération effectuée en réponse à la commande de fonctionnement et correspondant à la commande de fonctionnement, l'unité de commande (130) commande, en réponse à la commande de fin d'enregistrement, l'unité d'enregistrement vidéo (140) pour terminer l'enregistrement vidéo de façon à créer la donnée ambiante.
